# EUROPEAN PATENT SPECIFICATION

(11) **EP 4 194 528 B1**
(45) Date of publication and mention of the grant of the patent: **14.10.2026**
(21) Application number: 21854534.1
(22) Date of filing: 05.08.2021
(51) Int. Cl.: C09K 11/08, C09K 11/79, C09K 11/77

(54) **NITRIDE PHOSPHOR AND MANUFACTURING METHOD THEREFOR**
NITRIDPHOSPHOR UND HERSTELLUNGSVERFAHREN DAFÜR
LUMINOPHORE AU NITRURE ET PROCÉDÉ DE FABRICATION S'Y RAPPORTANT

(30) Priority: 06.08.2020 JP 2020134178; 27.01.2021 JP 2021010728; 17.06.2021 JP 2021100992
(43) Date of publication of application: 14.06.2023
(73) Proprietor: Nichia Corporation, Anan-shi, Tokushima 774-8601 (JP)
(72) Inventor: OGASA, Hiroshi, Anan-shi, Tokushima 774-8601 (JP); YOSHIDA, Shigeki, Anan-shi, Tokushima 774-8601 (JP); WATANABE, Hiroyuki, Anan-shi, Tokushima 774-8601 (JP)
(74) Representative: Vossius & Partner Patentanwälte Rechtsanwälte mbB
(86) International application number: PCT/JP2021/029141
(87) International publication number: WO 2022/030586

(56) References cited:
- WO-A1-2008/132954
- WO-A1-2017/170609
- WO-A1-2018/021418
- CN-A- 109 370 588
- CN-A- 109 476 992
- DE-A1- 10 254 175
- DE-T5- 112017 004 706
- JP-A- 2016 028 124
- JP-A- 2019 521 217
- JP-A- 2019 521 218
- JP-A- 2021 054 910
- JP-B2- 5 821 316

## Description

### TECHNICAL FIELD

The present disclosure relates to a nitride phosphor and a production method therefor.

### BACKGROUND ART

Light-emitting devices prepared by combination of a light-emitting element such as an LED (Light Emitting Diode) or an LD (Laser Diode) with a phosphor, wherein a part of light emitted from the light-emitting element undergoes color conversion by the phosphor to cause emission of a mixed-color light of the light from the light-emitting element and the light from the phosphor, are known. As a phosphor used for such light-emitting devices, for example, WO 2017/170609 and JP 2020-96175 A propose a nitride phosphor having a composition represented by (La, Y)₃Si₆N₁₁:Ce, which may be hereinafter simply referred to as "LYSN", or La₃Si₆N₁₁:Ce, which may be hereinafter simply referred to as "LSN", and a production method therefor. WO 2017/170609 **relates to a phosphor including a tetragonal crystal phase, in which the crystal phase includes M element, La, A element, Si, and N, and satisfies a specific expression, and a lattice constant a is 10.104 Å or more and 10.154 Å or less.**

### SUMMARY OF THE INVENTION

### PROBLEMS TO BE SOLVED BY THE INVENTION

Such LYSN phosphors require higher emission intensities. An object of one embodiment of the present disclosure is to provide a production method for a nitride phosphor capable of showing a high emission intensity.

### MEANS FOR SOLVING THE PROBLEMS

A first embodiment is a method of producing a nitride phosphor, the method including: obtaining a first heat-treated product having a crystallite diameter of not less than 150 nm by subjecting a compound containing at least one rare-earth element selected from the group consisting of yttrium (Y), lanthanum (La), cerium (Ce), lutetium (Lu), and gadolinium (Gd) to heat treatment at a temperature within a range of 800°C to 1800°C; and obtaining a second heat-treated product by subjecting a mixture containing: the first heat-treated product and a raw material contained as required; to heat treatment at a temperature within a range of 1200°C to 1800°C; the raw material contained as required being an M source containing at least one rare-earth element M selected from the group consisting of yttrium (Y), lutetium (Lu), and gadolinium (Gd); a lanthanum (La) source; a silicon (Si) source; and a cerium (Ce) source; the mixture being prepared with the raw **materials chosen** such that a fed composition represented by the following Formula (1) is obtained.

La_{w}MₓSi₆N_{y}:Ce_{z} (1)

In Formula (1), w, x, y, and z satisfy 0 < w < 4.5, 0 < x < 1.5, 0 < y ≤ 12, 0 < z < 1.5, 0.15 < (x + z) < 3.0, and 3.0 ≤ (w + x + z) ≤ 7.5.

A second embodiment is a nitride phosphor having a crystallite diameter of not more than 48 nm, and having a composition represented by the following Formula (2).

LaₚM_{q}Si₆Nᵣ:Ceₛ (2)

In the Formula (2), p, q, r, and s satisfy 0.5 ≤ p ≤ 3.05, 0 < q ≤ 1.2, 10 ≤ r ≤ 12, 0 < s ≤ 1.2, 0.05 < (q + s) ≤ 2.4, and 2.9 ≤ p + q + s ≤ 3.1.

### ADVANTAGEOUS EFFECT OF THE INVENTION

According to the present disclosure, a method of producing a nitride phosphor capable of showing a high emission intensity may be provided.

### BRIEF DESCRIPTION OF THE DRAWINGS

Fig. 1 is an exemplary scanning electron microscope (SEM) image of the yttrium oxide used in Comparative Example 1.
Fig. 2 is an exemplary SEM image of the yttrium oxide used in Example 1.
Fig. 3 is exemplary emission spectra of the nitride phosphors according to Example 1 and Comparative Example 1.
Fig. 4 is exemplary emission spectra of the nitride phosphors according to Example 2 and Comparative Example 3.
Fig. 5 is exemplary emission spectra of the nitride phosphors according to Examples 3 to 5 and Comparative Example 4.

### MODE FOR CARRYING OUT THE INVENTION

In the present specification, the term "step" includes not only an independent step, but also a step that is not clearly distinguishable from another step, as long as the desired purpose of the step can be achieved. Unless otherwise specified, when a plurality of substances corresponding to a certain component is present in a composition, the content of the component in the composition means the total amount of the plurality of substances present in the composition. The upper-limit values and lower-limit values of a numerical range described in the present description may be arbitrarily selected and combined. In an emission spectrum of a phosphor in the present description, the half-width of the phosphor means the wavelength width of the emission spectrum at which the emission intensity is 50% relative to the maximum emission intensity (full width at half maximum; FWHM). Embodiments of the present invention are described below in detail. The embodiments described below, however, are merely examples of a method of producing a nitride phosphor for realization of the technological consideration of the present invention. Therefore, the present invention is not limited to the method of producing a nitride phosphor described below.

### Method of Producing Nitride Phosphor

The method of producing a nitride phosphor includes a first heat treatment step of obtaining a first heat-treated product having a crystallite diameter of not less than 150 nm by subjecting a compound containing at least one rare-earth element selected from the group consisting of yttrium (Y), lanthanum (La), cerium (Ce), lutetium (Lu), and gadolinium (Gd) (hereinafter also simply referred to as "rare-earth compound") to heat treatment at a first heat treatment temperature within the range of 800°C to 1800°C; and a second heat treatment step of obtaining a second heat-treated product by subjecting a mixture containing the first heat-treated product and at least one raw material; to heat treatment at a second heat treatment temperature within the range of 1200°C to 1800°C; the at least one raw material being selected from the group consisting of an M source containing at least one rare-earth element M selected from the group consisting of yttrium (Y), lutetium (Lu), and gadolinium (Gd); a lanthanum (La) source; a silicon (Si) source; and a cerium (Ce) source. The mixture is prepared such that the content ratio among La, rare-earth element M, Si, and Ce results in a fed composition represented by the following Formula (1).

La_{w}MₓSi₆N_{y}:Ce_{z} (1)

In Formula (1), w, x, y, and z may satisfy 0 ≤ w ≤ 4.5, 0 < x ≤ 1.5, 0 ≤ y ≤ 12, 0 < z ≤ 1.5, 0.15 < (x + z) < 3.0, and 3.0 ≤ (w + x + z) ≤ 7.5, or may preferably satisfy 2.0 < w < 4.0, 0.3 < x < 1.2, 0 < y < 11.5, 0 < z < 1.2, 0.3 < (x + z) < 2.4, and 3.2 ≤ (w + x + z) ≤ 5.8.

By producing a nitride phosphor having a predetermined composition using, as a part of the raw materials, a rare-earth compound preliminarily heat-treated at a predetermined first heat treatment temperature, emission intensity of the produced nitride phosphor increases. This can be considered to be due to, for example, the following reason. It may be considered, for example, by preliminarily subjecting the rare-earth compound to the heat treatment at the predetermined heat treatment temperature, crystallinity of the rare-earth compound as a raw material of the nitride phosphor increases to enable control of its reactivity as the raw material. Thus, for example, when the rare-earth compound is an yttrium compound, it may be considered that a crystal structure of LSN (such as La₃Si₆N₁₁) that provides a nucleus is formed by reaction between an La source (such as LaN) and an Si source (such as Si₃N₄) in the reaction system, and that substitution reaction by reaction with the yttrium compound (such as Y₂O₃) then gradually proceeds within the second heat treatment temperature range to produce a desired nitride phosphor without destroying the crystal structure of the nucleus, to enable achievement of the improved emission intensity. It may be also considered that the yttrium compound (such as Y₂0₃) becomes more likely to form a solid solution, or to react with the LSN that provides the nucleus, leading to the improved emission intensity.

In the first heat treatment step, a rare-earth compound containing at least one rare-earth element selected from the group consisting of Y, La, Ce, Lu, and Gd is subjected to heat treatment. The rare-earth compound preferably contains at least one selected from the group consisting of Y, La, and Ce, more preferably contains at least Y. The rare-earth compound may be at least one selected from the group consisting of oxides, halides (for example, fluorides and chlorides), nitrides, alloys, and the like, containing a rare-earth element, or may be preferably at least one selected from the group consisting of oxides, fluorides, and nitrides, containing a rare-earth element. The rare-earth compound to be subjected to the heat treatment in the first heat treatment step may be either a single kind of compound or a combination of two or more kinds of compounds. The purity of the rare-earth compound may be, for example, not less than 95%, or may be preferably not less than 97% or not less than 98%. The upper limit of the purity of the rare-earth compound may be, for example, not more than 99.999%.

The first heat treatment temperature in the first heat treatment step may be, for example, 800°C to 1800°C. The temperature may be preferably not less than 900°C, not less than 1000°C, not less than 1200°C, not less than 1300°C, or not less than 1350°C, and may be not more than 1700°C, not more than 1650°C, not more than 1550°C, not more than 1500°C, or not more than 1450°C.

The heat treatment in the first heat treatment step may include heating to a predetermined first heat treatment temperature, maintaining the first heat treatment temperature, and cooling from the first heat treatment temperature. The heating rate to achieve the first heat treatment temperature, for example, in terms of the heating rate from room temperature may be 0.1°C/minute to 20°C/minute. It may be preferably not less than 0.5°C/minute or not less than 1°C/minute, and may be preferably not more than 15°C/minute or not more than 10°C/minute. The heat treatment time for maintaining the first heat treatment temperature may be, for example, 0.5 hour to 100 hours. It may be preferably not less than 2 hours or not less than 10 hours, and may be preferably not more than 20 hours or not more than 10 hours. The cooling rate from the first heat treatment temperature, for example, in terms of the cooling rate to room temperature may be not less than 1°C/minute and not more than 600°C/minute.

The atmosphere during the first heat treatment step may be, for example, an oxygen-containing atmosphere or air atmosphere. The atmosphere during the first heat treatment step may be an inert atmosphere containing nitrogen or a noble gas such as argon, or may be a reducing atmosphere containing a reducing gas such as hydrogen. The atmosphere during the first heat treatment may be appropriately selected depending on the type of the rare-earth compound.

The first heat-treated product obtained by the first heat treatment step may contain a rare-earth compound having a crystallite diameter of, for example, not less than 150 nm. The crystallite diameter of the first heat-treated product may be, for example, 150 nm to 600 nm. It may be preferably not less than 200 nm or not less than 250 nm, and may be preferably not more than 550 nm, not more than 500 nm, not more than 450 nm, or not more than 400 nm.

The crystallite diameter of the rare-earth compound contained in the first heat-treated product is measured by, for example, as follows. The rare-earth compound as a sample is subjected to measurement of the XRD pattern using an X-ray diffractometer. The crystallite diameter of the sample may be determined by fitting the XRD pattern of the crystal structure model of the rare-earth compound available from the International Center for Diffraction Data (ICDD) to the XRD pattern obtained by the measurement, using the Rietveld method.

The specific surface area of the first heat-treated product as measured by the BET method may be, for example, not less than 0.5 m²/g and not more than 2.1 m²/g. The specific surface area of the first heat-treated product as measured by the BET method may be preferably not less than 0.7 m²/g, and may be preferably not more than 1.5 m²/g. The measurement of the specific surface area by the BET method is carried out by the single-point method using nitrogen gas based on the BET (Brunauer Emmett Teller) theory.

In the first heat-treated product, the 50% particle size Dm corresponding to the volume accumulation of 50% from the small-diameter side in the particle size distribution on a volume basis may be, for example, 6.5 µm to 12.0 µm. The 50% particle size Dm of the first heat-treated product may be preferably not less than 7.5 µm or not less than 7.8 µm, and may be preferably not more than 11.5 µm or not more than 11.0 µm. The particle size distribution on a volume basis is measured using a laser diffractive particle size distribution measurement apparatus.

In the second heat treatment step, a mixture containing raw materials of the nitride phosphor is subjected to heat treatment at a second heat treatment temperature to obtain a second heat-treated product containing the nitride phosphor. The mixture to be subjected to the second heat treatment step contains at least the first heat-treated product. The mixture may contain: an M source containing at least one rare-earth element M selected from the group consisting of Y, Lu, and Gd; an La source; an Si source; and a Ce source, and may be prepared such that a fed composition represented by the Formula (1) described above is obtained with the element sources. The first heat-treated product may be contained as at least part of at least one selected from the group consisting of the M source, La source, and Ce source in the mixture, or may be contained as at least part of at least the M source. Each of the at least one element source selected from the group consisting of the M source, La source, and Ce source in the mixture may be composed only of the first heat-treated product, or may contain the first heat-treated product as part of the element source. When the element source contains the first heat-treated product as part thereof, the ratio of the number of moles of the first heat-treated product to the total number of moles of the element source may be, for example, not less than 0.1 and not more than 5.0, or may be preferably not less than 0.3 and not more than 4.5. The number of moles of an element source or the like herein is based on the number of moles of the element contained in the element source or the like.

The M source may contain at least one selected from the group consisting of Y, Lu, and Gd, or may preferably contain at least Y. The ratio of a molar amount of Y to the total amount of moles of the rare-earth element M contained in the M source may be, for example, not less than 90%, or may be preferably not less than 95% or not less than 98%. The M source may be a compound containing the rare-earth element M, a simple rare-earth element M, an alloy containing the rare-earth element M, or the like, or may be at least one selected from the group consisting of these. The compound containing the rare-earth element M may be at least one selected from the group consisting of oxides, halides (for example, fluorides and chlorides), nitrides, alloys, and the like, or may be preferably at least one selected from the group consisting of oxides, fluorides, and nitrides. The compound containing the rare-earth element M contained in the M source may be either a single kind of compound or a combination of two or more kinds of compounds.

The mixture may contain, as the M source, the first heat-treated product and a compound containing the rare-earth element M. Thus, the first heat-treated product may be a compound containing the rare-earth element M. The first heat-treated product may be, for example, at least one selected from the group consisting of oxides, fluorides, and nitrides, containing the rare-earth element M. The first heat-treated product may contain at least an oxide containing the rare-earth element M. Further, the rare-earth compound contained in the first heat-treated product may be either the same as or different from a compound containing the rare-earth element M other than the first heat-treated product.

When the number of moles of silicon (Si) contained in the mixture is taken as 6, the ratio of the number of moles of the element M contained in the M source contained in the mixture may be, for example, more than 0 and not more than 1.5. This ratio may be preferably not less than 0.2 or not less than 0.3, and may be preferably not more than 1.4 or not more than 1.2.

The La source may be a compound containing La, simple La element, an alloy containing La, or the like, or may be at least one selected from the group consisting of these. The compound containing La may be at least one selected from the group consisting of oxides, halides (for example, fluorides and chlorides), nitrides, alloys, and the like, or may be preferably at least one selected from the group consisting of oxides, fluorides, and nitrides. The compound containing La may more preferably contain at least a nitride. The compound containing La contained in the La source may be either a single kind of compound or a combination of two or more kinds of compounds.

When the number of moles of silicon (Si) contained in the mixture is taken as 6, the ratio of the number of moles of the element La contained in the La source contained in the mixture may be, for example, not less than 0 and not more than 4.5. This ratio may be preferably not less than 1.2, not less than 1.5, or not less than 2.0, and may be preferably not more than 4.3 or not more than 4.0.

The Ce source may be a compound containing Ce, simple Ce element, an alloy containing Ce, or the like, or may be at least one selected from the group consisting of these. The compound containing Ce may be at least one selected from the group consisting of oxides, halides (for example, fluorides and chlorides), nitrides, alloys, and the like, or may be preferably at least one selected from the group consisting of oxides, fluorides, and nitrides. The compound containing Ce may more preferably contain at least a fluoride. The compound containing Ce contained in the Ce source may be either a single kind of compound or a combination of two or more kinds of compounds.

When the number of moles of silicon (Si) contained in the mixture is taken as 6, the ratio of the number of moles of the element Ce contained in the Ce source contained in the mixture may be, for example, more than 0 and not more than 1.5. This ratio may be preferably not less than 0.05 or not less than 0.1, and may be preferably not more than 1.3 or not more than 1.2.

When the number of moles of silicon (Si) contained in the mixture is taken as 6, the ratio of the total number of moles of the rare-earth element M and the element Ce contained in the mixture may be, for example, more than 0.15 and less than 3. This ratio may be preferably more than 0.2 or more than 0.3, and may be preferably less than 2.6 or less than 2.4. When the number of moles of silicon (Si) contained in the mixture is taken as 6, the ratio of the total number of moles of the element La, the rare-earth element M, and the element Ce source contained in the mixture may be, for example, not less than 3 and not more than 7.5. This ratio may be preferably not less than 3.1 or not less than 3.2, and may be preferably not more than 6.8, not more than 6.3 or not more than 5.8.

The Si source may be a compound containing Si, simple Si element, an alloy containing Si, or the like, or may be at least one selected from the group consisting of these. The compound containing Si may be at least one selected from the group consisting of oxides, nitrides, and the like, or may be preferably at least one selected from the group consisting of oxides and nitrides. The compound containing Si may more preferably contain at least a nitride. The compound containing Si contained in the Si source may be either a single kind of compound or a combination of two or more kinds of compounds.

The purity of each of the M source, La source, Si source, and Ce source may be, for example, not less than 95%, or may be preferably not less than 98% or not less than 99%. The upper limit of this purity may be, for example, not more than 99.99999%.

The mixture may contain a halide such as a fluoride as at least part of the at least one element source selected from the group consisting of the M source, La source, and Ce source. When the mixture contains a halide, the content of the halide with respect to the total mass of the mixture may be, for example, not less than 1% by mass and not more than 40% by mass. The content may be preferably not less than 2.5% by mass or not less than 5% by mass, and may be preferably not more than 35% by mass or not more than 30% by mass.

The mixture is prepared by mixing the first heat-treated product with at least one selected from the group consisting of the M source, La source, Si source, and Ce source such that a predetermined fed ratio is achieved by wet or dry mixing using a mixer. By this, solid-phase reaction can be promoted to form particles having a uniform size. As the mixer, a ball mill which is industrially usually used may be employed, or a pulverizer such as a vibration mill, a roll mill, or a jet mill may be used. Further, by the pulverization using the pulverizer, the specific surface area can be increased. For adjusting the specific surface area of the powder to within a predetermined range, a wet separation apparatus such as a settling tank, a hydrocyclone, or a centrifuge, or a dry classification apparatus such as a cyclone or an air separator which is industrially usually used may be employed to perform classification.

In the second heat treatment step, the prepared mixture is subjected to heat treatment at a predetermined second heat treatment temperature to obtain a second heat-treated product containing a desired nitride phosphor. The second heat treatment temperature in the second heat treatment step may be, for example, not less than 1200°C and not more than 1800°C. The temperature may be preferably not less than 1300°C or not less than 1400°C, and may be preferably not more than 1700°C, not more than 1600°C, or not more than 1550°C.

The heat treatment in the second heat treatment step may include heating to a predetermined second heat treatment temperature, maintaining the second heat treatment temperature, and cooling from the second heat treatment temperature. The heating rate to achieve the second heat treatment temperature in terms of the heating rate from room temperature may be, for example, not less than 0.1°C/minute and not more than 20°C/minute. It may be preferably not less than 0.5°C/minute or not less than 1°C/minute, and may be preferably not more than 15°C/minute, not more than 10°C/minute, or not more than 8°C/minute. The heating to achieve the second heat treatment temperature may be carried out at a plurality of heating rates. For example, a first heating rate for heating from room temperature to a third heat treatment temperature that is less than the second heat treatment temperature, and a second heating rate for heating from the third heat treatment temperature to the second heat treatment temperature may be employed. The third heat treatment temperature may be, for example, not less than 1000°C and not more than 1300°C, or may be preferably not less than 1100°C and not more than 1300°C. The first heating rate may be, for example, not less than 1°C/minute and not more than 20°C/minute. It may be preferably not less than 2°C/minute or not less than 3°C/minute, and may be preferably not more than 10°C/minute or not more than 8°C/minute. The second heating rate may be, for example, not less than 0.1°C/minute and not more than 10°C/minute. It may be preferably not less than 0.5°C/minute or not less than 0.8°C/minute, and may be preferably not more than 5°C/minute or not more than 3°C/minute.

The heat treatment time for maintaining the second heat treatment temperature may be, for example, not less than 1 hour and not more than 30 hours. It may be preferably not less than 5 hours or not less than 10 hours, and may be preferably not more than 20 hours or not more than 15 hours. The cooling rate from the second heat treatment temperature in terms of the cooling rate for cooling to room temperature may be, for example, not less than 1°C/minute and not more than 600°C/minute.

The second heat treatment step may include subjecting the mixture to heat treatment by maintaining a plurality of different temperatures, wherein each temperature is maintained for a predetermined length of time. Thus, for example, the second heat treatment step may include: subjecting the mixture to heat treatment by maintaining a fourth heat treatment temperature; and maintaining a fifth heat treatment temperature that is higher than the fourth heat treatment temperature to carry out heat treatment of the mixture that has been subjected to the heat treatment at the fourth heat treatment temperature. The fourth heat treatment temperature may be, for example, not less than 1200°C and not more than 1400°C, or may be preferably not less than 1250°C and not more than 1350°C. The fifth heat treatment temperature may be, for example, not less than 1400°C and not more than 1800°C, or may be preferably not less than 1450°C and not more than 1750°C, or not less than 1500°C and not more than 1700°C. The difference between the fifth heat treatment temperature and the fourth heat treatment temperature may be, for example, not less than 100°C and not more than 500°C. The difference is preferably not less than 150°C or not less than 200°C, and preferably not more than 450°C or not more than 350°C.

The heat treatment at the fourth heat treatment temperature and the heat treatment at the fifth heat treatment temperature may be carried out continuously. Alternatively, after carrying out the heat treatment at the fourth temperature, the mixture may be cooled, and then heated to the fifth heat treatment temperature. Further, after the heat treatment at the fourth heat treatment temperature, the heat-treated product may be pulverized and mixed, followed by carrying out the heat treatment at the fifth heat treatment temperature.

The heating rate to achieve the fourth heat treatment temperature in terms of, for example, the heating rate from room temperature may be not less than 0.1°C/minute and not more than 20°C/minute. It may be preferably not less than 0.5°C/minute or not less than 1°C/minute, and may be preferably not more than 15°C/minute, not more than 10°C/minute, or not more than 8°C/minute. The heating rate to achieve the fifth heat treatment temperature in terms of, for example, the heating rate from room temperature may be not less than 0.1°C/minute and not more than 20°C/minute. It may be preferably not less than 0.5°C/minute or not less than 1°C/minute, and may be preferably not more than 15°C/minute, not more than 10°C/minute, or not more than 8°C/minute.

The heat treatment time for maintaining the fourth heat treatment temperature may be, for example, not less than 1 hour and not more than 30 hours. It may be preferably not less than 2 hours or not less than 4 hours, and may be preferably not more than 15 hours or not more than 8 hours. The heat treatment time for maintaining the fifth heat treatment temperature may be, for example, not less than 1 hour and not more than 30 hours. It may be preferably not less than 5 hours or not less than 8 hours, and may be preferably not more than 20 hours or not more than 15 hours.

The atmosphere during the second heat treatment step may be an inert atmosphere containing nitrogen or a noble gas such as argon, or may be a reducing atmosphere containing a reducing gas such as hydrogen.

The second heat-treated product obtained by the second heat treatment step may be subjected to treatment such as pulverization, dispersion, washing, filtration, and/or classification. The washing can be carried out by, for example, dispersing the second heat-treated product in water, and then carrying out solid-liquid separation. The solid-liquid separation can be carried out by a method industrially usually used, such as filtration, suction filtration, pressure filtration, centrifugation, or decantation. The second heat-treated product may be subjected to acid treatment. The acid treatment can be carried out by, for example, dispersing the second heat-treated product in an acidic aqueous solution, and then carrying out solid-liquid separation. After the acid treatment, washing with water and solid-liquid separation may be carried out. After the solid-liquid separation, drying treatment may be carried out. The drying treatment can be carried out by an apparatus industrially usually used, such as a vacuum dryer, a hot-air heater, a conical dryer, or a rotary evaporator.

### Nitride Phosphor

The nitride phosphor may have a crystallite diameter of not more than 48 nm, and a composition containing: lanthanum (La); cerium (Ce); at least one rare-earth element M selected from the group consisting of yttrium (Y), lutetium (Lu), and gadolinium (Gd); silicon (Si); and nitrogen (N). In the composition of the nitride phosphor, when the number of moles of silicon is taken as 6, the molar content ratio of lanthanum may be not less than 0.5 and not more than 3.05; the molar content ratio of the rare-earth element M may be more than 0 and not more than 1.2; the molar content ratio of cerium may be more than 0 and not more than 1.2; and the molar content ratio of nitrogen may be not less than 10 and not more than 12. Further, when the number of moles of silicon Si is taken as 6, the ratio of the total number of moles of the rare-earth element M and the element Ce may be more than 0.05 and not more than 2.4, and the ratio of the total number of moles of the element La, the rare-earth element M, and the element Ce may be 2.9 to 3.1.

By producing the nitride phosphor by, for example, the production method described above, high emission intensity may be achieved. The peak emission wavelength of the nitride phosphor may be, for example, not less than 550 nm, or may be preferably not less than 555 nm or not less than 560 nm. The upper limit of the peak emission wavelength of the nitride phosphor may be, for example, not more than 620 nm, or may be preferably not more than 615 nm or not more than 610 nm. The half-width in the emission spectrum of the nitride phosphor may be, for example, not less than 100 nm, or may be preferably not less than 110 nm, not less than 115 nm, or not less than 120 nm. The upper limit of the half-width may be, for example, not more than 150 nm, or is preferably not more than 140 nm or not more than 130 nm.

The nitride phosphor may have a composition containing: at least one rare-earth element M selected from the group consisting of lanthanum (La), cerium (Ce), yttrium (Y), lutetium (Lu), and gadolinium (Gd); silicon (Si); and nitrogen (N). The cerium may be contained as an activator element in the composition of the nitride phosphor, and may be a luminescence center of the nitride phosphor. The molar content ratio of yttrium (Y) to the total amount of moles of the rare-earth element M contained in the nitride phosphor may be, for example, not less than 90%, or is preferably not less than 95% or not less than 98%.

In the composition of the nitride phosphor, when the number of moles of silicon is taken as 6, the molar content ratio of lanthanum may be, for example, not less than 0.5 and not more than 3.05. It may be preferably not less than 1.2 or not less than 2.0, and may be preferably not more than 2.7 or not more than 2.2. In the composition of the nitride phosphor, when the number of moles of silicon is taken as 6, the molar content ratio of the rare-earth element M may be, for example, more than 0 and not more than 1.2, or may be preferably not less than 0.3 and not more than 1.0. In the composition of the nitride phosphor, when the number of moles of silicon is taken as 6, the molar content ratio of cerium may be, for example, more than 0 and not more than 1.2, or may be preferably not less than 0.15 and not more than 1.0. In the composition of the nitride phosphor, when the number of moles of silicon is taken as 6, the molar content ratio of nitrogen may be, for example, not less than 10 and not more than 12, or may be preferably not less than 10.5 and not more than 11.5. In the composition of the nitride phosphor, when the number of moles of silicon is taken as 6, the ratio of the total number of moles of the rare-earth element M and the element Ce may be, for example, more than 0.05 and not more than 2.4, or may be preferably not less than 0.15 and not more than 2.0, or not less than 0.3 and not more than 2.0. In the composition of the nitride phosphor, when the number of moles of silicon is taken as 6, the ratio of the total number of moles of the element La, the rare-earth element M, and the element Ce source may be, for example, not less than 2.9 and not more than 3.1, or may be preferably not less than 2.95 and not more than 3.05. The nitride phosphor may have, for example, a composition represented by the following Formula (2).

LaₚM_{q}Si₆Nᵣ:Ceₛ (2)

In Formula (2), M may contain at least one selected from the group consisting of Y, Lu, and Gd, or preferably contains at least Y. The molar content ratio of Y in M may be not less than 90%, or is preferably not less than 95%. p, q, r, and s satisfy 0.5 ≤ p ≤ 3.05, 0 < q < 1.2, 10 ≤ r ≤ 12, 0 < s ≤ 1.2, 0.05 < (q + s) ≤ 2.4, and 2.9 ≤ p + q + s ≤ 3.1, preferably satisfy 2.0 ≤ p ≤ 2.7, 0.3 ≤ q ≤ 1.0, 10.5 ≤ r ≤ 11.5, 0 < s ≤ 1.0, 0.3 ≤ (q + s) ≤ 2.0, and 2.95 ≤ p + q + s ≤ 3.05.

In the composition of the nitride phosphor, part of the rare-earth element M may be replaced by at least one selected from the group consisting of group 2 elements, or may be preferably replaced by at least one selected from the group consisting of alkaline earth metal elements including Mg. When part of the rare-earth element M is replaced by an element(s) other than rare-earth elements, the molar content ratio of the another/other element(s) in the rare-earth element M is, for example, not more than 10%, preferably not more than 5% or not more than 3%. Regarding the lower limit of the molar content ratio of the other element(s), the molar content ratio may be, for example, not less than 0.01%, or is preferably not less than 1.0%. When part of the rare-earth element M is replaced by another/other element(s), the total molar content ratio of Y, Lu, and Gd to the total amount of moles of the rare-earth element M contained in the nitride phosphor may be, for example, not less than 90%, or is preferably not less than 95% or not less than 98%. The molar content ratio of Y to the total amount of moles of the rare-earth element M contained in the nitride phosphor may be, for example, not less than 90%, or is preferably not less than 95% or not less than 98%.

In the composition of the nitride phosphor, part of the silicon may be replaced by at least one selected from the group consisting of boron (B), aluminum (Al), gallium (Ga), and germanium (Ge). When part of the silicon is replaced by an element(s) other than silicon, the molar content ratio of the element(s) other than silicon to the total number of moles of the silicon and of the element(s) other than silicon in the composition is, for example, not more than 50%, preferably not more than 20% or not more than 10%. The lower limit of the molar content ratio of the element(s) other than silicon may be, for example, not less than 0.01%, or is preferably not less than 5%. When part of the silicon in the composition of the nitride phosphor is replaced by an element(s) other than silicon, the molar content ratio of the silicon to the total number of moles of the silicon and of the element(s) other than silicon may be, for example, not less than 90%, or is preferably not less than 95% or not less than 98%.

From the viewpoint of the emission intensity, the particle size distribution of the nitride phosphor may show a single-peak particle size distribution. The average particle size of the nitride phosphor may be, for example, not less than 1 µm and not more than 100 µm, or is preferably not less than 5 µm and not more than 70 µm, or not less than 10 µm and not more than 50 µm. The 50% particle size Dm corresponding to the accumulation of 50% from the small-diameter side in the particle size distribution on a volume basis may be, for example, not less than 1 µm and not more than 100 µm. It may be preferably not less than 5 µm, not less than 10 µm, not less than 20 µm, not less than 30 µm, or not less than 40 µm, and may be preferably not more than 70 µm, not more than 60 µm, or not more than 50 µm.

The crystallite diameter of the nitride phosphor may be, for example, not more than 50 nm, or may be preferably not more than 48 nm, not more than 47 nm, not more than 46 nm, not more than 44 nm, or not more than 42 nm. The lower limit of the crystallite diameter of the nitride phosphor may be, for example, not less than 20 nm. When the crystallite diameter of the nitride phosphor is not more than the predetermined value, the emission intensity tends to further increase, and the half-width tends to be narrower. The crystallite diameter of the nitride phosphor is measured in the same manner as the crystallite diameter of the rare-earth compound using the XRD data of the nitride phosphor registered in the ICDD database.

### EXAMPLES

The present invention is described below more concretely by way of Examples. However, the present invention is not limited by these Examples.

### Reference Example 1

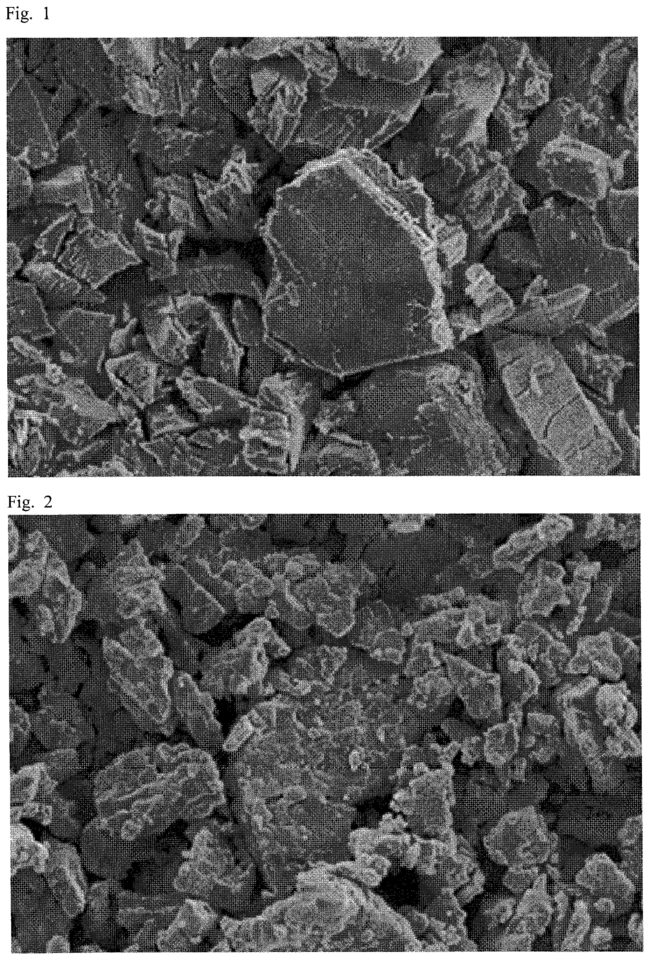

A commercially available yttrium oxide (hereinafter also referred to as yttrium oxide 1) was placed in an alumina crucible, and heated to 1000°C at a heating rate of 3°C/minute to 7°C/minute in the air. After the temperature reached 1000°C, the temperature was maintained for 4 hours to carry out heat treatment. Thereafter, the yttrium oxide was cooled to room temperature to obtain yttrium oxide 2 as a first heat-treated product. The yttrium oxide 1 before the heat treatment and the yttrium oxide 2 obtained were subjected to measurement of the crystallite diameter, 50% particle size Dm, and BET specific surface area by the later-mentioned methods. The results are shown in Table 1. Fig. 1 shows a scanning electron microscope (SEM) image of yttrium oxide 1.

### Reference Example 2

Yttrium oxide 3 was obtained in the same manner as in Reference Example 1 except that the heat treatment temperature was 1300°C.

### Reference Example 3

Yttrium oxide 4 was obtained in the same manner as in Reference Example 1 except that the heat treatment temperature was 1400°C.

Fig. 2 shows an SEM image of yttrium oxide 4. As can be seen in Fig. 2, compared to yttrium oxide 1 shown in Fig. 1, yttrium oxide 4 was formed to be relatively large particles as aggregates of smaller particles. This is considered to be due to the fact that yttrium oxide 4 has a larger crystallite diameter than yttrium oxide 1.

### Reference Example 4

Yttrium oxide 5 was obtained in the same manner as in Reference Example 1 except that the heat treatment temperature was 1500°C.

### Reference Example 5

Yttrium oxide 6 was obtained in the same manner as in Reference Example 1 except that the heat treatment temperature was 1600°C.

### Measurement of Crystallite Diameter

An yttrium oxide sample was subjected to XRD measurement (X-ray diffraction; CuKα; tube voltage, 40 kV; tube current, 20 mA; scanning range, within the range of 10° to 70° (10° ≤ 2θ ≤ 70°); radiation source, CuKα; scan axis, 2θ/θ; measurement method, FT; coefficient unit, counts; step width, 0.02°; coefficient time, 20°/minute) using an X-ray diffractometer (product name, Ultima IV; manufactured by Rigaku Corporation). Measurement data were read using the analysis software PDXL (manufactured by Rigaku Corporation), which uses the fundamental parameter method. The XRD pattern of a crystal structure model was simulated using the ICDD database, and the XRD pattern obtained by the measurement was fitted to the XRD pattern obtained from the crystal structure model. The crystallite diameter of the sample was calculated from the value obtained using the Rietveld method, which enables optimization by the least squares method such that the residual is minimized. As the XRD data for yttrium oxide, the ICDD card No. 01-089-05592 was used.

### Measurement of 50% Particle Size (Dm)

The yttrium oxide sample was subjected to measurement of the particle size distribution on a volume basis using a laser diffractive particle size distribution measurement apparatus (product name, MASTER SIZER 3000; manufactured by MALVERN) to determine the particle size corresponding to the accumulation of 50% from the small-diameter side as Dm.

### Measurement of BET Specific Surface Area

The yttrium oxide sample was subjected to measurement of the BET specific surface area using an automatic specific surface area measurement apparatus (product name, Macsorb; manufactured by MOUNTECH Co., Ltd.) by the BET method employing the single-point method using nitrogen gas.

**[Table 1]**

| | Heat treatment temperature (°C) | Crystallite diameter (nm) | 50% Particle size Dm (µm) | BET Specific surface area (m²/g) |
|---|---|---|---|---|
| Yttrium oxide 1 | - | 148.8 | 7.2 | 2.2 |
| Yttrium oxide 2 | 1000 | 153.0 | 6.8 | 2.0 |
| Yttrium oxide 3 | 1300 | 263.5 | 8.2 | 1.1 |
| Yttrium oxide 4 | 1400 | 328.6 | 8.3 | 0.9 |
| Yttrium oxide 5 | 1500 | 292.8 | 8.6 | 0.7 |
| Yttrium oxide 6 | 1600 | 491.9 | 9.1 | 0.7 |

### Example 1

Yttrium oxide 4 (Y₂O₃) having a crystallite diameter of 328.6 nm obtained by heat treatment, and yttrium fluoride (YF₃); lanthanum nitride (LaN) as an La source; silicon nitride (Si₃N₄) as an Si source; and cerium fluoride (CeF₃) as a Ce source; were used. The raw materials were weighed such that the molar ratio among the elements was La:Y:Si:Ce = 3.50:1.00:6.00:1.00. The molar ratio between Y₂O₃ and YF₃ was adjusted to 1:1. More specifically, 37.5 parts by mass of LaN, 4.0 parts by mass of Y₂O₃, 5.1 parts by mass of YF₃, 19.7 parts by mass of Si₃N₄, and 13.8 parts by mass of CeF₃ were weighed.

The weighed raw materials were sufficiently pulverized and mixed by the dry method to obtain a mixture (hereinafter also referred to as raw-material mixture). The raw-material mixture obtained was placed in a crucible, and subjected to heat treatment under a reducing atmosphere at 1500°C for 5 hours. In this process, the heating rate from room temperature to 1200°C was set to 300°C per hour (5°C/minute), and the heating rate from 1200°C to 1500°C was set to 60°C per hour (1°C/minute), to carry out the heat treatment to obtain a second heat-treated product. The second heat-treated product obtained was pulverized, and then dispersed in water for 2 hours, followed by carrying out solid-liquid separation to collect a nitride phosphor. The nitride phosphor collected was stirred in 7% by mass aqueous hydrochloric acid solution for 1 hour, and then washing with water, or the like was carried out until a neutral pH of about 7.0 was achieved, followed by drying to obtain a nitride phosphor of Example 1 in a powder form.

### Comparative Example 1

A nitride phosphor of Comparative Example 1 was obtained by the same procedure as in Example 1 except that yttrium oxide 1 having a crystallite diameter of 148.8 nm that had not been subjected to heat treatment was used instead of yttrium oxide 4.

### Comparative Example 2

A nitride phosphor of Comparative Example 2 was obtained by the same procedure as in Example 1 except that yttrium oxide having a crystallite diameter of 90.5 nm that had not been subjected to heat treatment was used instead of yttrium oxide 4.

### Evaluation of Emission Properties

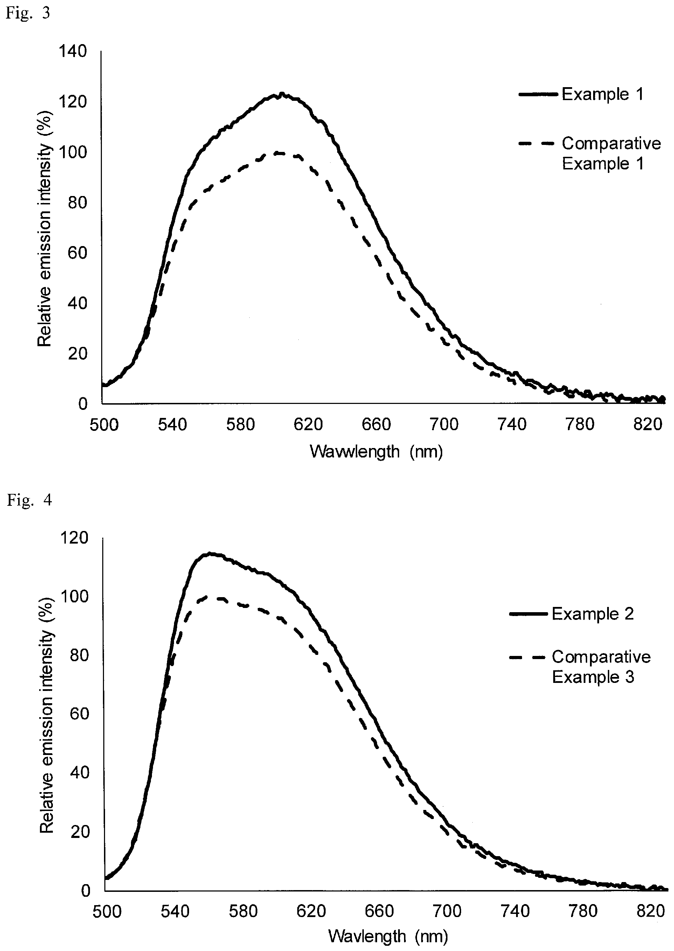

The nitride phosphors obtained as described above were subjected to measurement of the relative emission intensity, the chromaticity, the peak emission wavelength, and the half-width, using a quantum efficiency measurement system (QE-2000, manufactured by Otsuka Electronics Co., Ltd.) at room temperature (25°C) with an excitation light having a wavelength of 450 nm. The results are shown in Table 2. The emission spectra are shown in Fig. 3. The relative emission intensities in Table 2 were calculated using the emission intensity of the nitride phosphor of Comparative Example 1 as a standard (100.0%).

### Evaluation of 50% Particle Size (Dm)

The nitride phosphors obtained as described above were subjected to measurement of the particle size distribution on a volume basis using a laser diffractive particle size distribution measurement apparatus (product name, MASTER SIZER 3000; manufactured by MALVERN) to determine the particle size corresponding to the accumulation of 50% from the small-diameter side as Dm. The results are shown in Table 2.

**[Table 2]**

| | Raw material Y₂O₃ | | | | Relative emission intensity (%) | Chromaticity | | Peak emission wavelength (nm) | Half-width (nm) | 50% Particle size (µm) |
|---|---|---|---|---|---|---|---|---|---|---|
| | Heat treatment temperature (°C) | Crystallite diameter (nm) | 50% Particle size (µm) | BET Specific surface area (m²/g) | | x | y | | | |
| Example 1 | 1400 | 328.6 | 8.3 | 0.9 | 120.8 | 0.523 | 0.473 | 605 | 131.4 | 36.9 |
| Comparative Example 1 | - | 148.8 | 7.2 | 2.2 | 100.0 | 0.520 | 0.476 | 609 | 132.4 | 38.7 |
| Comparative Example 2 | - | 90.5 | 6.1 | 2.8 | 91.7 | 0.522 | 0.473 | 602 | 132.4 | 41.0 |

### Example 2

A nitride phosphor of Example 2 was obtained by the same procedure as in Example 1 except that the raw-material mixture was prepared such that the molar ratio among the elements was La:Y:Si:Ce = 3.20:0.90:6.00:0.80.

### Comparative Example 3

A nitride phosphor of Comparative Example 3 was obtained by the same procedure as in Example 1 except that yttrium oxide (Y₂O₃) having a crystallite diameter of 53.2 nm that had not been subjected to heat treatment was used, and that the raw-material mixture was prepared such that the molar ratio of the elements was La:Y:Si:Ce = 3.20:0.90:6.00:0.80.

### Evaluation of Emission Properties

In the same manner as described above, the relative emission intensity, the chromaticity, the peak emission wavelength, and the half-width were measured. The results are shown in Table 3. The emission spectra are shown in Fig. 4. The relative emission intensities in Table 3 were calculated using the emission intensity of the nitride phosphor of Comparative Example 3 as a standard (100.0%).

**[Table 3]**

| | Raw material Y₂O₃ | | | | Relative emission intensity (%) | Chromaticity | | Peak emission wavelength (nm) | Half-width (nm) |
|---|---|---|---|---|---|---|---|---|---|
| | Heat treatment temperature (°C) | Crystallite diameter (nm) | 50% Particle size (µm) | BET Specific surface area (m²/g) | | x | y | | |
| Example 2 | 1400 | 328.6 | 8.3 | 0.9 | 112.4 | 0.499 | 0.498 | 562 | 127.3 |
| Comparative Example 3 | - | 53.2 | 0.1 | 20 | 100.0 | 0.495 | 0.498 | 562 | 128.6 |

As shown in Table 2 and Table 3, the emission intensity of the obtained nitride phosphor could be increased by using heat-treated yttrium oxide as a raw material. Further, Example 1, in which the yttrium ratio in the composition of the nitride phosphor is higher, showed a longer peak emission wavelength and a higher emission intensity. Thus, in the production of a nitride phosphor in which a longer wave component is demanded, use of heat-treated yttrium oxide as a raw material is more advantageous.

### Example 3

Yttrium oxide 4 (Y₂O₃) having a crystallite diameter of 328.6 nm obtained by heat treatment, as a first heat-treated product; lanthanum nitride (LaN) as an La source; silicon nitride (Si₃N₄) as an Si source; and cerium fluoride (CeF₃) as a Ce source; were used. The raw materials were weighed such that the molar ratio of the elements was La:Y:Si:Ce = 3.20:1.00:6.00:1.00. More specifically, 41.0 parts by mass of LaN, 18.9 parts by mass of Y₂O₃, 23.5 parts by mass of Si₃N₄, and 16.5 parts by mass of CeF₃ were weighed.

The weighed raw materials were sufficiently pulverized and mixed by the dry method to obtain a raw-material mixture. The raw-material mixture obtained was placed in a crucible, and subjected to heat treatment under a reducing atmosphere at 1300°C for 5 hours. Thereafter, the mixture was removed from the crucible, and then sufficiently pulverized and mixed again by the dry method, followed by carrying out heat treatment again under a reducing atmosphere at 1540°C for 10 hours. The second heat-treated product obtained was pulverized, and then dispersed in water for 2 hours, followed by carrying out solid-liquid separation to collect a nitride phosphor. The nitride phosphor collected was stirred in 7% by mass aqueous hydrochloric acid solution for 1 hour, and then washing with water, or the like was carried out until a neutral pH of about 7.0 was achieved, followed by drying to obtain a nitride phosphor of Example 3 in a powder form.

### Example 4

A nitride phosphor of Example 4 was obtained by the same procedure as in Example 3 except that yttrium oxide 5 having a crystallite diameter of 292.8 nm was used instead of yttrium oxide 4.

### Example 5

A nitride phosphor of Example 5 was obtained by the same procedure as in Example 3 except that yttrium oxide 6 having a crystallite diameter of 491.9 nm was used instead of yttrium oxide 4.

### Comparative Example 4

A nitride phosphor of Comparative Example 4 was obtained by the same procedure as in Example 3 except that yttrium oxide 1 having a crystallite diameter of 148.8 nm that had not been subjected to heat treatment was used instead of yttrium oxide 4.

### Evaluation of Emission Properties

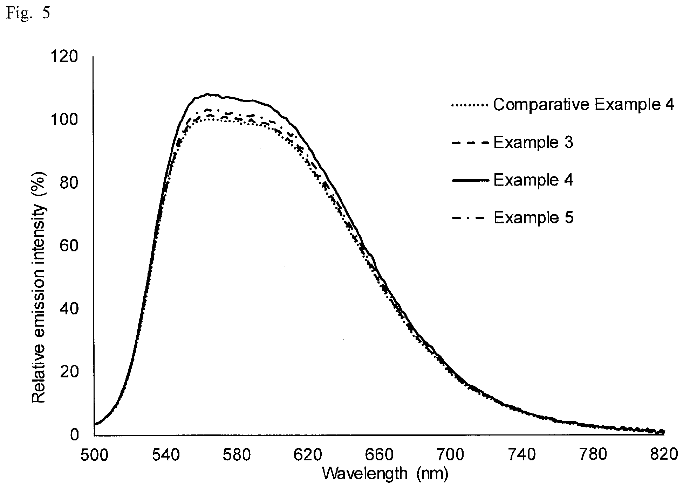

In the same manner as described above, the relative emission intensity, the chromaticity, the peak emission wavelength, and the half-width were measured. The results are shown in Table 4. The emission spectra are shown in Fig. 5. The relative emission intensities in Table 4 were calculated using the emission intensity of the nitride phosphor of Comparative Example 4 as a standard (100.0%).

**[Table 4]**

| | Raw material Y₂O₃ | | | | Relative emission intensity (%) | Chromaticity | | Peak emission wavelength (nm) | Half-width (nm) | 50% Particle size (µm) |
|---|---|---|---|---|---|---|---|---|---|---|
| | Heat treatment temperature (°C) | Crystallite diameter (nm) | 50% Particle size (µm) | BET Specific surface area (m²/g) | | x | y | | | |
| Example 3 | 1400 | 328.6 | 8.3 | 0.9 | 101.3 | 0.502 | 0.493 | 566 | 126.7 | 26.9 |
| Example 4 | 1500 | 292.8 | 8.6 | 0.7 | 107.3 | 0.502 | 0.493 | 564 | 126.3 | 26.4 |
| Example 5 | 1600 | 491.9 | 9.1 | 0.7 | 102.7 | 0.502 | 0.492 | 567 | 127.0 | 26.4 |
| Comparative Example 4 | - | 148.8 | 7.2 | 2.2 | 100.0 | 0.502 | 0.493 | 567 | 127.0 | 27.8 |

As shown in Table 4, the emission intensity of the obtained nitride phosphor could be increased by using heat-treated yttrium oxide as a raw material even when the second heat treatment step was carried out by two-stage heat treatment at different temperatures.

### Example 6

Yttrium oxide 4 (Y₂O₃) having a crystallite diameter of 328.6 nm obtained by heat treatment, and yttrium fluoride (YF₃); lanthanum nitride (LaN) as an La source; silicon nitride (Si₃N₄) as an Si source; and cerium fluoride (CeF₃) and cerium nitride (CeN) as Ce sources; were used. The raw materials were weighed such that the molar ratio of the elements was La:Y:Si:Ce = 3.20:1.00:6.00:1.00. The molar ratio between Y₂O₃ and YF₃ was adjusted to 1:1, and the molar ratio between CeF₃ and CeN was also adjusted to 1:1. More specifically, 38.2 parts by mass of LaN, 4.0 parts by mass of Y₂O₃, 5.2 parts by mass of YF₃, 20.0 parts by mass of Si₃N₄, 7.0 parts by mass of CeF₃, and 5.5 parts by mass of CeN were weighed.

The weighed raw materials were sufficiently pulverized and mixed by the dry method to obtain a raw-material mixture. The raw-material mixture obtained was placed in a crucible, and subjected to heat treatment under a reducing atmosphere at 1525°C for 8 hours. In this process, the heating rate from room temperature to 1200°C was set to 300°C per hour (5°C/minute), and the heating rate from 1200°C to 1525°C was set to 60°C per hour (1°C/minute), to carry out the heat treatment to obtain a second heat-treated product. The second heat-treated product obtained was pulverized, and then dispersed in water for 15 hours, followed by carrying out solid-liquid separation to collect a nitride phosphor. The nitride phosphor collected was stirred in 7% by mass aqueous hydrochloric acid solution for 1 hour, and then washing with water, or the like was carried out until a neutral pH of about 7.0 was achieved, followed by drying to obtain a nitride phosphor of Example 6 in a powder form.

### Example 7

A nitride phosphor of Example 7 was obtained by the same procedure as in Example 6 except that yttrium oxide 6 (Y₂O₃) having a crystallite diameter of 491.9 nm was used instead of yttrium oxide 4.

### Comparative Example 5

A nitride phosphor of Comparative Example 5 was obtained by the same procedure as in Example 6 except that yttrium oxide 1 (Y₂O₃) having a crystallite diameter of 148.8 nm that had not been subjected to heat treatment was used instead of yttrium oxide 4.

### Measurement of Crystallite Diameter of Nitride Phosphor

Each nitride phosphor obtained as described above was subjected to XRD measurement (X-ray diffraction; CuKα; tube voltage, 40 kV; tube current, 20 mA; scanning range, within the range of 10° to 70° (10° ≤ 2θ ≤ 70°); radiation source, CuKα; scan axis, 2θ/θ; measurement method, FT; coefficient unit, counts; step width, 0.02°; coefficient time, 20°/minute) using an X-ray diffractometer (product name, Ultima IV; manufactured by Rigaku Corporation). Measurement data were read using the analysis software PDXL (manufactured by Rigaku Corporation), which uses the fundamental parameter method. The XRD pattern of a crystal structure model was simulated using the ICDD database, and the XRD pattern obtained by the measurement was fitted to the XRD pattern obtained from the crystal structure model. The crystallite diameter of the sample was calculated from the value obtained using the Rietveld method, which enables optimization by the least squares method such that the residual is minimized. As the XRD data for the nitride phosphor, the ICDD card No. 01-083-8621 (Ce₃Si₆N₁₁) was used. The results are shown in Table 5.

### Evaluation of Emission Properties

In the same manner as described above, the relative emission intensity, the chromaticity, the peak emission wavelength, and the half-width were measured. The results are shown in Table 5. The relative emission intensities in Table 5 were calculated using the emission intensity of the nitride phosphor of Comparative Example 5 as a standard (100.0%).

**[Table 5]**

| | Raw material Y₂O₃ | | | | Crystallite diameter (nm) | Relative emission intensity (%) | Chromaticity | | Peak emission wavelength (nm) | Half-width (nm) | 50% Particle size (µm) |
|---|---|---|---|---|---|---|---|---|---|---|---|
| | Heat treatment temperature (°C) | Crystallite diameter (nm) | 50% Particle size (µm) | BET Specific surface area (m²/g) | | | x | y | | | |
| Example 6 | 1400 | 328.6 | 8.3 | 0.9 | 46.3 | 100.1 | 0.517 | 0.479 | 568 | 125.4 | 48.2 |
| Example 7 | 1600 | 491.9 | 9.1 | 0.7 | 41.5 | 104.6 | 0.516 | 0.481 | 566 | 124.8 | 45.1 |
| Comparative Example 5 | - | 148.8 | 7.2 | 2.2 | 48.2 | 100.0 | 0.517 | 0.480 | 572 | 126.2 | 45.2 |

As shown in Table 5, the inclusion of yttrium oxide having a larger crystallite diameter in the raw material resulted in a higher emission intensity. It is considered that higher crystallinity of the rare-earth compound as a raw material of the nitride phosphor enabled better control of the reactivity as the raw material, resulting in the higher emission intensity of the nitride phosphor.

Reference is made to the disclosure of Japanese patent application No. 2020-134178 (filing date: August 6, 2020), Japanese patent application No. 2021-010728 (filing date: January 27, 2021), and Japanese patent application No. 2021-100992 (filing date: June 17, 2021).

### INDUSTRIAL APPLICABILITY

The nitride phosphor of the present disclosure can be used as a phosphor contained in a wavelength conversion member to be contained in a light source in, for example, a general lighting device such as a ceiling light; a spotlight; a vehicle lighting device such as a headlight; a projection device such as a projector or a head-up display; an imaging device such as a digital camera, a mobile phone, or a smartphone; or a liquid crystal display device for a personal computer (PC) monitor, a television, a personal digital assistant (PDX), a smartphone, a tablet PC, or a mobile phone.

## Claims

1. A method for producing a nitride phosphor, the method comprising:
obtaining a first heat-treated product having a crystallite diameter of not less than 150 nm by subjecting a compound containing at least one rare-earth element selected from the group consisting of Y, La, Ce, Lu, and Gd to heat treatment at a temperature within a range of 800°C to 1800°C; and
obtaining a second heat-treated product by subjecting a mixture containing: the first heat-treated product and a raw material contained as required; to heat treatment at a temperature within a range of 1200°C to 1800°C;
the raw material contained as required being an M source containing at least one rare-earth element M selected from the group consisting of Y, Lu, and Gd; an La source; an Si source; and a Ce source;
the mixture being prepared with the raw materials chosen such that a fed composition is represented by the following Formula (1):
La_{w}MₓSi₆N_{y}:Ce_{z} (1),
wherein in the Formula (1), w, x, y, and z satisfy 0 ≤ w ≤ 4.5, 0 < x ≤ 1.5, 0 ≤ y ≤ 12, 0 < z ≤ 1.5, 0.15 < (x + z) < 3.0, and 3.0 ≤ (w + x + z) ≤ 7.5;

2. The method for producing a nitride phosphor according to claim 1, wherein, in the obtaining of the first heat-treated product, the temperature for the heat treatment is within a range of 900°C to 1700°C.

3. The method for producing a nitride phosphor according to claim 1 or 2, wherein, in the obtaining of the first heat-treated product, the first heat-treated product has a crystallite diameter of not more than 500 nm.

4. The method for producing a nitride phosphor according to any one of claims 1 to 3, wherein, in the obtaining of the first heat-treated product, the first heat-treated product has a specific surface area of 0.5 m²/g to 2.1 m²/g as measured by a BET method.

5. The method for producing a nitride phosphor according to any one of claims 1 to 4, wherein, in the compound containing a rare-earth element in the obtaining of the first heat-treated product, a molar content ratio of Y in the rare-earth element M is not less than 90%.

6. The method for producing a nitride phosphor according to any one of claims 1 to 5, wherein the nitride phosphor obtained as the second heat-treated product has a composition represented by the following Formula (2):
LaₚM_{q}Si₆Nᵣ:Ceₛ (2),
wherein in the Formula (2), p, q, r, and s satisfy 0.5 ≤ p ≤ 3.05, 0 < q ≤ 1.2, 10 ≤ r ≤ 12, 0 < s ≤ 1.2, 0.05 < (q + s) ≤ 2.4, and 2.9 ≤ p + q + s ≤ 3.1, and
M is selected from the group consisting of Y, Lu, and Gd.

7. A nitride phosphor having a crystallite diameter of not more than 48 nm, and having a composition represented by the following Formula (2):
LaₚM_{q}Si₆Nᵣ:Ceₛ (2),
wherein in the Formula (2), p, q, r, and s satisfy 0.5 ≤ p ≤ 3.05, 0 < q ≤ 1.2, 105 ≤ r ≤ 12, 0 < s ≤ 1.2, 0.05 < (q + s) ≤ 2.4, and 2.9 ≤ p + q + s ≤ 3.1, and
M is selected from the group consisting of Y, Lu, and Gd.

8. The nitride phosphor according to claim 7, wherein a 50% particle size Dm corresponding to an accumulation of 50% from a small-diameter side in a particle size distribution on a volume basis is 10 µm to 50 µm.

## Patentansprüche

1. Ein Verfahren zur Herstellung eines Nitridphosphors, wobei das Verfahren umfasst:
Erhalt eines ersten wärmebehandelten Produkts mit einem Kristallitdurchmesser von nicht weniger als 150 nm durch Unterziehen einer Verbindung, die mindestens ein Seltenerdelement, ausgewählt aus der Gruppe bestehend aus Y, La, Ce, Lu und Gd, enthält, einer Wärmebehandlung bei einer Temperatur in einem Bereich von 800°C bis 1800°C; und
Erhalt eines zweiten wärmebehandelten Produkts durch Unterziehen eines Gemischs, welches das erste wärmebehandelte Produkt und ein nach Bedarf enthaltenes Ausgangsmaterial enthält, einer Wärmebehandlung bei einer Temperatur in einem Bereich von 1200°C bis 1800°C;
wobei das nach Bedarf enthaltene Ausgangsmaterial eine M-Quelle, die mindestens ein Seltenerdelement M, ausgewählt aus der Gruppe bestehend aus Y, Lu und Gd, enthält; eine La-Quelle; eine Si-Quelle; und eine Ce-Quelle ist;
wobei das Gemisch mit den Ausgangsmaterialien hergestellt wird, die derart ausgewählt sind, dass eine zugeführte Zusammensetzung durch die folgende Formel (1) dargestellt ist:
La_{w}MₓSi₆N_{y}:Ce_{z} (1),
wobei in der Formel (1) w, x, y und z 0 ≤ w ≤ 4,5, 0 ≤ x ≤ 1,5, 0 ≤ y ≤ 12, 0 ≤ z ≤ 1,5, 0,15 < (x + z) < 3,0 und 3,0 < (w + x + z) < 7,5 erfüllen.

2. Das Verfahren zur Herstellung eines Nitridphosphors nach Anspruch 1, wobei beim Erhalt des ersten wärmebehandelten Produkts die Temperatur für die Wärmebehandlung in einem Bereich von 900°C bis 1700°C liegt.

3. Das Verfahren zur Herstellung eines Nitridphosphors nach Anspruch 1 oder 2, wobei beim Erhalt des ersten wärmebehandelten Produkts das erste wärmebehandelte Produkt einen Kristallitdurchmesser von nicht mehr als 500 nm aufweist.

4. Das Verfahren zur Herstellung eines Nitridphosphors nach einem der Ansprüche 1 bis 3, wobei beim Erhalt des ersten wärmebehandelten Produkts das erste wärmebehandelte Produkt eine spezifische Oberfläche von 0,5 m²/g bis 2,1 m²/g aufweist, wie durch ein BET-Verfahren gemessen.

5. Das Verfahren zur Herstellung eines Nitridphosphors nach einem der Ansprüche 1 bis 4, wobei in der ein Seltenerdelement enthaltenden Verbindung beim Erhalt des ersten wärmebehandelten Produkts ein Molgehaltsverhältnis von Y in dem Seltenerdelement M nicht weniger als 90% beträgt.

6. Das Verfahren zur Herstellung eines Nitridphosphors nach einem der Ansprüche 1 bis 5, wobei der als das zweite wärmebehandelte Produkt erhaltene Nitridphosphor eine Zusammensetzung aufweist, die durch die folgende Formel (2) dargestellt ist:
LaₚM_{q}Si₆Nᵣ:Ceₛ (2),
wobei in der Formel (2) p, q, r und s 0,5 ≤ p ≤ 3,05, 0 < q ≤ 1,2, 10 ≤ r ≤ 12, 0 < s ≤ 1,2, 0,05 < (q + s) ≤ 2,4 und 2,9 ≤ p + q + s ≤ 3,1 erfüllen und
M aus der Gruppe bestehend aus Y, Lu und Gd ausgewählt ist.

7. Ein Nitridphosphor mit einem Kristallitdurchmesser von nicht mehr als 48 nm und mit einer Zusammensetzung, die durch die folgende Formel (2) dargestellt ist:
LaₚM_{q}Si₆Nᵣ:Ceₛ (2),
wobei in der Formel (2) p, q, r und s 0,5 ≤ p ≤ 3,05, 0 < q ≤ 1,2, 10 ≤ r ≤ 12, 0 < s ≤ 1,2, 0,05 < (q + s) ≤ 2,4 und 2,9 ≤ p + q + s < 3,1 erfüllen und
M aus der Gruppe bestehend aus Y, Lu und Gd ausgewählt ist.

8. Der Nitridphosphor nach Anspruch 7, wobei eine 50%-Teilchengröße Dm, die einer Akkumulation von 50% ausgehend von einer Seite mit kleinem Durchmesser in einer Teilchengrößenverteilung auf Volumenbasis entspricht, 10 µm bis 50 µm beträgt.

## Revendications

1. Méthode de production d'un phosphore de nitrure, la méthode comprenant :
l'obtention d'un premier produit traité thermiquement ayant un diamètre de cristallite qui n'est pas inférieur à 150 nm en soumettant un composé contenant au moins un élément de terre rare choisi dans le groupe constitué par Y, La, Ce, Lu et Gd à un traitement thermique à une température dans une plage allant de 800°C à 1800°C ; et
l'obtention d'un deuxième produit traité thermiquement en soumettant un mélange contenant : le premier produit traité thermiquement et une matière première contenue selon les besoins ; à un traitement thermique à une température dans une plage allant de 1200°C à 1800°C ;
la matière première contenue selon les besoins étant une source M contenant au moins un élément de terre rare M choisi dans le groupe constitué par Y, Lu et Gd ; une source de La ; une source de Si ; et une source de Ce ;
le mélange étant préparé avec les matières premières choisies de telle sorte qu'une composition d'alimentation est représentée par la formule suivante (1) :
La_{w}MₓSi₆N_{y}:Ce_{z} (1),
dans laquelle, dans la formule (1), w, x, y et z répondent à 0 ≤ w ≤ 4,5, 0 < x ≤ 1,5, 0 ≤ y ≤ 12, 0 < z ≤ 1,5, 0,15 < (x + z) < 3,0, et 3,0 ≤ (w + x + z) ≤ 7,5.

2. Méthode de production d'un phosphore de nitrure selon la revendication 1, dans laquelle, dans l'obtention du premier produit traité thermiquement, la température pour le traitement thermique est comprise dans une plage allant de 900°C à 1700°C.

3. Méthode de production d'un phosphore de nitrure selon la revendication 1 ou 2, dans laquelle, dans l'obtention du premier produit traité thermiquement, le premier produit traité thermiquement a un diamètre de cristallite qui n'est pas supérieur à 500 nm.

4. Méthode de production d'un phosphore de nitrure selon l'une quelconque des revendications 1 à 3, dans laquelle, dans l'obtention du premier produit traité thermiquement, le premier produit traité thermiquement a une surface spécifique de 0,5 m²/g à 2,1 m²/g telle que mesurée par une méthode BET.

5. Méthode de production d'un phosphore de nitrure selon l'une quelconque des revendications 1 à 4, dans laquelle, dans le composé contenant un élément de terre rare dans l'obtention du premier produit traité thermiquement, un rapport de teneur molaire de Y dans l'élément de terre rare M n'est pas inférieur à 90 %.

6. Méthode de production d'un phosphore de nitrure selon l'une quelconque des revendications 1 à 5, dans laquelle le phosphore de nitrure obtenu en tant que deuxième produit traité thermiquement a une composition représentée par la formule suivante (2) :
LaₚM_{q}Si₆Nᵣ:Ceₛ (2),
dans laquelle, dans la formule (2), p, q, r et s répondent à 0,5 ≤ p ≤ 3,05, 0 < q ≤ 1,2, 10 ≤ r ≤ 12, 0 < s ≤ 1,2, 0,05 < (q + s) ≤ 2,4, et 2,9 ≤ p + q + s ≤ 3,1, et
M est choisi dans le groupe constitué par Y, Lu et Gd.

7. Phosphore de nitrure ayant un diamètre de cristallite qui n'est pas supérieur à 48 nm, et ayant une composition représentée par la formule suivante (2) :
LaₚM_{q}Si₆Nᵣ:Ceₛ (2),
dans laquelle, dans la formule (2), p, q, r et s répondent à 0,5 ≤ p ≤ 3,05, 0 < q ≤ 1,2, 10 ≤ r ≤ 12, 0 < s ≤ 1,2, 0,05 < (q + s) ≤ 2,4, et 2,9 ≤ p + q + s ≤ 3,1, et
M est choisi dans le groupe constitué par Y, Lu et Gd.

8. Phosphore de nitrure selon la revendication 7, dans lequel une taille de particules Dm à 50 % correspondant à une accumulation de 50 % depuis un côté de petits diamètres dans une distribution de tailles de particules sur une base volumique est de 10 µm à 50 µm.
